# EUROPEAN PATENT APPLICATION

(11) **EP 3 260 955 A1**
(43) Date of publication of application: **27.12.2017**
(21) Application number: 16751956.0
(22) Date of filing: 17.02.2016
(51) Int. Cl.: G06F 3/023

(54) **SLIDE INPUT METHOD AND APPARATUS**

(30) Priority: 17.02.2015 CN 201510086379
(71) Applicant: Shanghai Chule (CooTek) Information Technology Co., Ltd., Shanghai 200233 (CN)
(72) Inventor: ZOU, Lin, Shanghai 200233 (CN)
(74) Representative: Kolster Oy Ab
(86) International application number: PCT/CN2016/073935
(87) International publication number: WO 2016/131425

(57) **Abstract**

A slide input method and apparatus, the method comprising: upon detection of a slide input operation, acquiring a character corresponding to a contact position (S101); performing filtration in a database on the basis of the character corresponding to the contact position, to obtain a significant character, and obtaining a significant character string corresponding to the sliding trajectory on the basis of the significant character (S102); wherein performing filtration in the database comprises choosing a character combination from the database and enabling the character corresponding to the contact position to be contained in a set character bit of the chosen character combination; and outputting the significant character string when the sliding trajectory meets preset feedback conditions (S103). The amount of computation is effectively reduced and input efficiency is improved.

## Description

### TECHNICAL FIELD

The present invention relates to text input technology and, more particularly, to a sliding input method and device.

### BACKGROUND

In the prior art, use of a conventional virtual keyboards would introduce great inconvenience to the user primarily due to a limited size of the touch screen displaying the keyboard as well as representations of a rather large number of options for the user to choose from. As a result, areas of the representations on the screen have to be made very small, making it difficult for the user to select an intended option by correctly tapping the area of a corresponding one of the representations on the screen and, as a result, usually necessitating the use of a tool with a smaller touch area, such as a stylus. This, however, in most cases, requires the user to operate with both hands - one for holding the electronic device and the other for holding the stylus to tap the touch screen - which makes the operation cumbersome and may lead to various mistakes such as tapping of wrong keys for various reasons in some scenarios, for example, where the user is located in a moving vehicle or other jolting environments.

A device equipped with a small touch screen usually utilizes a virtual keyboard containing keys that a user taps or clicks to accomplish the input function. In the prior art, use of a conventional virtual keyboard would introduce great inconvenience to the user primarily due to a limited size of the touch screen displaying the keyboard as well as representations of a rather large number of options for the user to choose from. As a result, areas of the representations on the screen have to be made very small, making it difficult for the user to select an intended option by correctly tapping the area of a corresponding one of the representations on the screen and, as a result, usually necessitating the use of a tool with a smaller touch area, such as a stylus. This, however, in most cases, requires the user to operate with both hands - one for holding the electronic device and the other for holding the stylus to tap the touch screen for input - which makes the operation cumbersome and may lead to various mistakes such as tapping of wrong keys for various reasons in some scenarios, for example, where the user is located in a moving vehicle or other jolting environments.

Sliding input is a brand-new input method developed in recent years. In the contemporary society where efficiency is valued, whether an input method is efficient is considered as a critical metric for measuring its performance. Sliding input is just such a method meeting the efficiency requirements in which input is accomplished by swipe gestures in contact with the touchscreen surface of a mobile phone or a tablet and sequentially connecting syllables.

However, in conventional methods for sliding input, until the use completes a swipe motion will not characters in the sliding path be analyzed. This leads to low efficiency.

### SUMMARY

The present invention is aim to improve sliding input efficiency and reduce the required calculation amount.

In order to solve the above problem, embodiments of the present invention provide a sliding input method, comprising: upon detection of a sliding input motion, obtaining a character corresponding to a contact position; and performing a filtering process on a database based on the character corresponding to the contact position to obtain valid character and obtaining valid string(s) corresponding to a sliding path based on the valid character, wherein performing the filtering process in the database comprises selecting character combination(s) in the database, each containing the character corresponding to the contact position at its predefined character position. When the sliding path satisfies a predefined feedback condition, the valid string(s) is/are output.

According to one aspect of embodiments of the present invention, selecting the character combination(s) in the database, each containing the character corresponding to the contact position at its predefined character position comprises, when the character corresponding to the contact position is not the first selected character, performing a filtering process on the database based on combination(s) of one or more previously selected characters with the character corresponding to the contact position. That is, when the character corresponding to the contact position is not the first selected character, combination(s) of all subset(s) of the previously selected character(s) with the character corresponding to the contact position serve(s) as a basis for the filtering process performed on the database.

According to another aspect of embodiments of the present invention, a sliding input device is provided, comprising: an obtainment unit adapted to, upon detection a sliding input motion, obtain a character corresponding to a contact position; a filtering unit adapted to perform a predefined filtering process on a database based on the character corresponding to the contact position to obtain valid character and, based on the valid character, obtain valid string(s) corresponding to a sliding path; an input displaying unit adapted to output the valid string(s) when the sliding path satisfies a predefined feedback condition.

Compared to the prior art, in the proposed solution, based on a character corresponding to a contact position in a sliding path, character combination(s) is/are obtained each containing the character corresponding to the contact position at its predefined character position after selection and/or exclusion processes are performed. This allows quick and accurate selection of valid character from a database, and much more accurate string(s) can be obtained based on such valid character. In addition, the predefined feedback condition enables displaying the obtain string(s) as soon as the condition is satisfied rather than presenting them to the user after the sliding input motion is completed. This can effectively reduce the required calculation amount and improve the input efficiency.

### BRIEF DESCRIPTION OF THE DRAWINGS

Fig. 1 is a flowchart graphically illustrating a sliding input method according to an embodiment of the present invention.
Fig. 2 is a flowchart graphically illustrating step S101 in a sliding input method according to an embodiment of the present invention.
Fig. 3 is a diagram schematically showing a sliding input motion performed in a sliding input method according to an embodiment of the present invention.
Fig. 4 is a diagram schematically illustrating a flow of data in a device used in a sliding input method according to an embodiment of the present invention.
Fig. 5 is a diagram schematically illustrating valid strings displayed in a keyboard area in a sliding input method according to an embodiment of the present invention.
Fig. 6 is a diagram schematically illustrating how data are stored in a sliding input method according to an embodiment of the present invention.
Fig. 7 schematically shows a sliding input motion made in a sliding input method according to an embodiment of the present invention.
Fig. 8 is a flowchart of step S102 in a sliding input method according to an embodiment of the present invention.
Fig. 9 schematically shows a filtering process performed on a database in a sliding input method according to an embodiment of the present invention for the scenario shown in Figs. 7 and 8.
Fig. 10 is a structural schematic of a sliding input device according to an embodiment of the present invention.

### DETAILED DESCRIPTION

Before describing embodiments of the present invention in detail, it should be noted that these embodiments are primarily directed to combinations of method steps and device components for inputting text in electronic devices. Those device components and method steps are shown at proper positions of the accompanying drawings and indicated at conventional numerals in such a manner that only their details related to understanding the embodiments of the invention are presented in order to avoid obscuring the present disclosure by the details apparent to those of ordinary skill in the art who benefit from the present invention.

As used herein, the terms "first", "second" and so on are intended only to distinguish one entity or action from another without necessarily requiring or implying that these entities actually have such a relationship or that these actions are actually carried out in such an order. In addition, the terms "comprise", "include" or any other variation thereof are intended to cover a non-exclusive inclusion. As such, a process, method, article, or apparatus that comprises a list of features is not necessarily limited only to those features but may include other features not expressly listed or inherent to such process, method, article, or apparatus.

The term "keyboard" is defined in a broad sense to include any input means with defined areas, including, but not limited to, physical, mechanical keyboards, physical, inductive keyboards and virtual keyboards on touchscreen displays. While the embodiments of the invention are described with virtual keyboards on touchscreen displays as an example, one of ordinary skill in the art will appreciate that the methods and devices mentioned herein may also be used in physical keyboards.

The foregoing objects, features and advantages of the present invention will become more apparent from the following detailed description of several specific embodiments which is to be read in conjunction with the accompanying drawings.

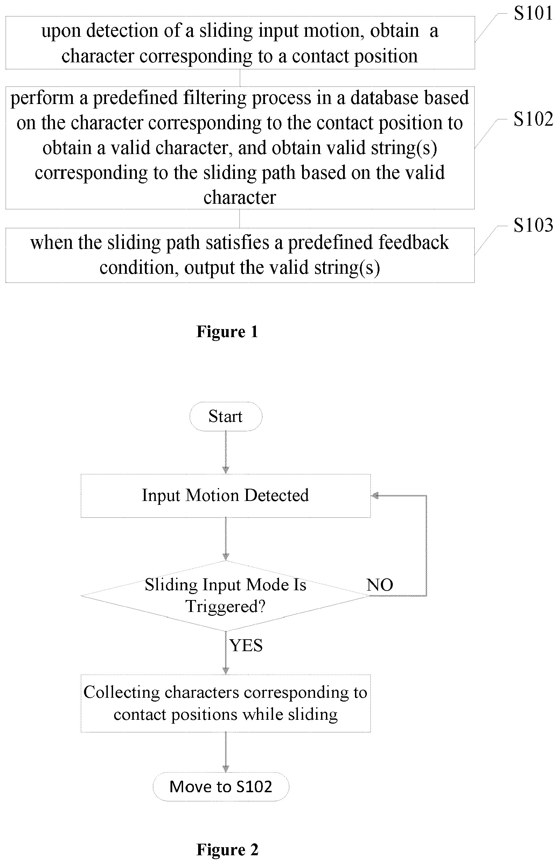

Fig. 1 shows a flowchart of a sliding input method according to an embodiment of the present invention. As shown in the figure, the sliding input method can include the steps as detailed below.

In step S101: upon detection of a sliding input motion, a character corresponding to a contact position is obtained.

In specific embodiments, when a user is making a swipe gesture on a keyboard, locations involved in the gesture ("contact positions") constitute a sliding path. In step S101, the character corresponding to the contact position can be obtained in real time in order to allow the user to provide a feedback in a timely way based on the contact position.

In specific embodiments, various layouts may be selected for the keyboard depending on the language used, or different layouts may be used for the same language. The present invention is not limited to any particular layout. For example, for the English language, a full QWERTY keyboard layout may be used, including keys for the 26 English letters, the numbers and symbols, as well as a space key. Each letter corresponds to a distinct key, and numbers and symbols can share the same keys with some of the letters. Alternatively, a full AZERTY keyboard layout may be used. It is a matter of course that other keyboard layouts may also be applicable, for example, a compact half-QWERTY keyboard layout in which two characters share the same key or an alpha-numeric keypad layout in which more characters share the same key. Apart from English, the keyboard layout may also be able to handle other languages, and the letters and other locations may be adapted to the language or layout used.

In specific embodiments, referring to Fig. 2, step S101 may also include: detecting the input motion and determining whether to initiate a sliding input mode; and when the sliding input mode is initiated, obtaining the character corresponding to the contact position.

The input motion made by the user on the keyboard may be a tapping, for example, a "press-lift" motion made by the user on the keyboard with a finger or another input means, or a swipe, for example, a motion that enables input of multiple characters by beginning with pressing one key and then swiping across a number of keys to the next intended key without lifting and optionally so forth. To this end, in specific embodiments, condition(s) for triggering the sliding input mode may be predefined. Additionally, in step S101, it may be checked whether the condition is satisfied to determine whether to initiate the sliding input mode. The trigger condition may include: a length of the sliding path reaching a preset length threshold; or the sliding path forming a preset shape such a triangle, a circle or a user-defined shape; or a particular gesture, such as a sliding motion starting from a specific location such as the space key or the upper left corner of the keyboard. Once the condition is met, the sliding input method according to the embodiment of the present invention may be triggered, initiating sampling of characters corresponding to locations in the sliding path touched by the user. In one embodiment, the character corresponding to the contact position may be sampled in real time.

It will be appreciated that, in specific embodiments, instead of performing sliding input through detecting the path of the swipe gesture made by the user on the keyboard displayed on the touch screen with a finger or another touch input means such as a stylus, the user input may also be received using, for example, a membrane keyboard or another inductive device allowing sliding input.

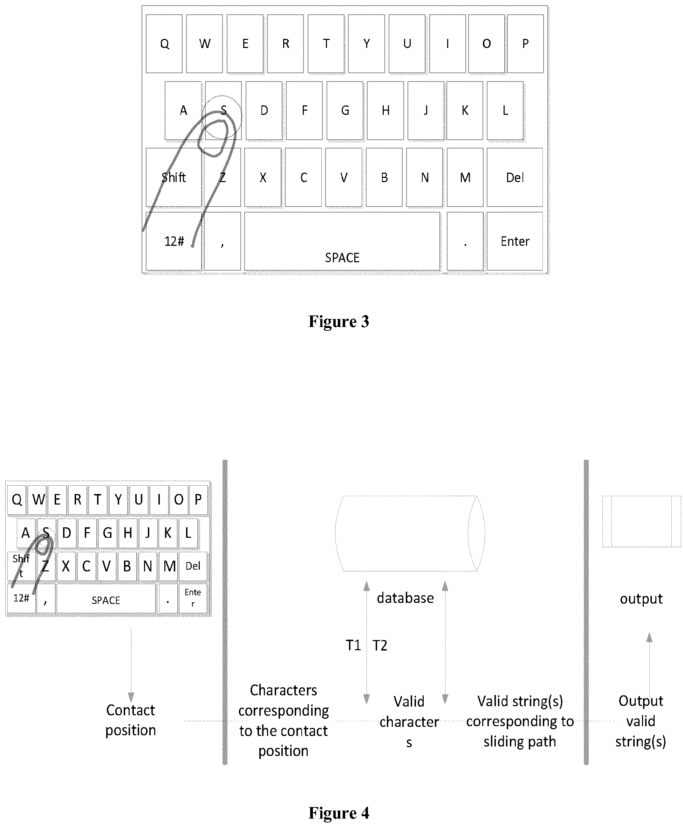

In specific embodiments, sampling a character corresponding to a contact position may include: gathering coordinate data corresponding to the contact position; and obtaining the character associated with the coordinate data based on the keyboard layout used. The character corresponding to the contact position may include the character just at the touch location or a character surrounding it. In specific embodiments, the surrounding character may include any of all characters adjacent to the character at the contact position. For example, with reference to Fig. 3, if the sliding path pass through the character "s" in the keyboard, a search may be made in a corresponding database based on coordinates of the character "s" for all possible characters that may additionally include "w", "w", "e", "a", "x", "d" and "z". In another embodiment, the surrounding character may alternatively include any of adjacent characters arranged along a present direction. For example, in the case shown in Fig. 3, the character corresponding to the contact position may be "s", "a" or "d".

Referring to Figs. 1 and 4, step S102 may include: performing a predefined filtering process on the database based on the character corresponding to the contact position to obtain valid character and obtaining valid string(s) corresponding to the sliding path based on the valid combination(s).

In specific embodiments, the filtering process further includes a selection process and a exclusion process. Specifically, the filtering process performed on the database may include: in step T1, performing the selection process to select character combination(s) in the database, each containing the character corresponding to the contact position at its predefined character position, wherein the character at the predefined character position is a valid character; and in step T2, performing the exclusion process to exclude, from the character combination(s) containing the character corresponding to the contact position, any character combination impossible to form a valid string, wherein in each remaining character combination, the character corresponding to the contact position is a valid character. In the filtering process performed on the database, each of steps T1 and T2 may be performed once or more times, so that at least one character combination each consisting of one or more valid characters is obtained.

It will be appreciated by those skilled in the art that, in particular implementations, every time when the sliding path proceeds from a character key to another character key adjacent thereto or from one stop to another stop, each of steps T1 and T2 may be performed once or more times. In addition, steps T1 and T2 may be performed either in the above-described order, or in the reverse order or in parallel, and the present invention is not limited to any particular order in which the steps are performed.

In specific embodiments, the character combination(s) each consisting of one or more valid characters resulting from the forgoing filtering process may be directly taken as the valid string(s) corresponding to the sliding path or serve as a basis for predicting the valid string(s) each containing one of the character combination(s).

In step S103, when the sliding path satisfies a predefined feedback condition, the valid string(s) is/are output.

Conventionally, only after the user has swiped across all letters of an intended word or phrase, will these letters and optionally even their surrounding letters be recorded and calculated, which leads to a huge amount of calculate and a great burden on the involved hardware. In view of these drawbacks of the prior art, in sliding input methods according to embodiments of the present invention, candidate word(s) obtained based on selected character(s) is/are output and displayed for the user to choose from during, but not after, the completion of the user's sliding input motion. This can result in not only reductions in the required calculation amount but also a considerable increase in input efficiency. In one embodiment, one or more feedback conditions may be alternatively predefined so that the valid string(s) will not be output unless all the feedback conditions are met so as to reduce the chance for an erroneous feedback.

In one embodiment of the present invention, the predefined feedback condition may be passage of the sliding path through a predetermined location of the keyboard. In specific embodiments, the predetermined location of the keyboard may include gaps between adjacent keys in the keyboard. In this case, every time the sliding path passes through one of the gaps, the valid string(s) will be output. As such, candidate words selected based on characters corresponding to locations along the user's sliding path can be displayed in a real-time manner, resulting in reductions in the required calculation amount and a considerable increase in sliding input efficiency. In addition, with the sliding path proceeding, one or more corresponding candidate words are displayed, in part or as a whole, in the vicinity of the currently contact position in real time, allowing organic combination of the candidate word areas with the area of the contact position in the sliding path. As a result, the user does not need to switch his/her sight between the sliding path and the candidate words. Thus, improvements in user experience and sliding input efficiency can be achieved.

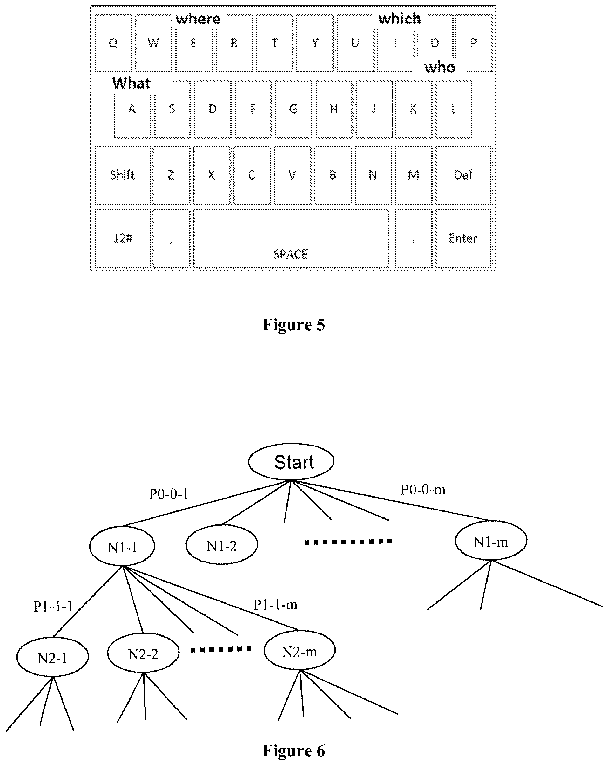

Further, the predetermined location of the keyboard may also be, for example, the location of the space key, esc key, enter key or the like, or a location out of the key area, for example, the upper left corner of the screen. In this case, whenever it is detected that the sliding path passes through the predetermined location, for example, the space key, the valid string(s) will be output. For example, with reference to Fig. 5, with "w" and "h" having been selected, when the sliding path further proceeds to the location of the space key, the valid strings corresponding to the sliding path, i.e., "where", "which", "what" and "who" are displayed.

In one embodiment of the present invention, the predefined feedback condition is a length of the sliding path reaching a preset length threshold. The length threshold may be configured according to practical needs, for example, as 5 cm, 2 cm or the like. When it is detected that the path length has exceeded the preset length threshold, the valid string(s) is/are output. The length of the sliding path may be a length from the previous contact position at which valid string(s) was/were displayed to the current contact position at which the valid string(s) is/are to be output.

In one embodiment of the present invention, the predefined feedback condition is a duration corresponding to the sliding path reaching a preset duration threshold. The duration threshold may be configured according to practical needs, for example, as 0.3 s, 0.5 s, 0.01 s, 0.4 ms or the like. Similarly, when it is detected that the duration has exceeded the preset duration threshold, the valid string(s) is/are output. The duration may be an interval from the time of the previous outputting of valid string(s) to that of the current outputting of valid string(s).

In one embodiment of the present invention, the valid string(s) corresponding to the sliding path may be output in a visual or acoustic manner. In the former case, the one or more valid strings corresponding to the sliding path may be displayed, for example, above, under or left or right to a key in the keyboard corresponding to the current character or respective key(s) corresponding to the next letter(s). Referring to Fig. 5, in the case that the valid character combination "wh" is obtained after characters corresponding to contact positions in the sliding path are subjected to a filtering process in step S102, a prediction is made based on the valid character combination, resulting in the valid strings, "where", "which", "what" and "who". Then in step S103, the valid strings are displayed around their respective letters next to the current letter "h", i.e., "e", "i", "a" and "o".

In one embodiment of the present invention, a reminder about the output may be provided in a multimedia manner, for example, by vibration or animation popping up.

Furthermore, according to the present invention, step S102 is provided to achieve a feedback updated in a timely manner with the input motion made by the user continuing. In the step, a filtering process including a selection process and/or a exclusion process is carried out on the database based on the character corresponding to the currently contact position in the sliding path to obtain valid character(s). Additionally, when the character corresponding to the contact position is not the first selected character, the filtering process is performed based combination(s) of all subset(s) of previously selected character(s) with the character corresponding to the currently contact position.

Step S102 according to one embodiment of the present invention will be described in detail below in context of a tree-structured dictionary as shown in Fig. 6.

With reference to Fig. 6, in one embodiment of the present invention, candidate words can be stored in the tree-structured dictionary. Each node Ni-1, Ni-2, ..., Ni-m in the tree-structured dictionary represents a letter at a corresponding ordinal position of the candidate words, where i denotes a depth of the node in the tree (i.e., the i-th tier), and characters at nodes of the i-th tier therefore represent i-th characters in the candidate words; and where m denotes the total number of characters at the tire. For example, as there are 26 letters in the English alphabet, m may be any positive integer from 1 to 26. If the tree-structured dictionary contains words having other symbols, such as "don't", then m may be greater than 26.

Nodes in the tree-structured dictionary are connected by links Pi-j-1, Pi-j-2, ..., Pi-j-m, where i-j indicates that the links connect the parent nodes Ni-j. A sequence of nodes in a path leading from the root node down to a certain node is called a character sequence of the node (or the path). If a character at a node is the last character of a candidate word in the dictionary, then the node is referred to as a word node. A path that does not exist indicates that there is no character sequence for the path in the dictionary.

For example, nodes corresponding to the candidate word "apple" are, sequentially from the root node downward, "a", "p", "p", "l" and "e". The node corresponding to the first character "a" in the candidate word "apple" is at the first tire of the tree, that to the second character "p" at the second tire, that to the third character "p" at the third tire, that to the fourth character "l" at the fourth tire, and that to the fifth character "e" at the fifth tire. In addition, since the candidate word "apple" ends with the fifth character "e", the character "e" is the word node for the candidate word "apple".

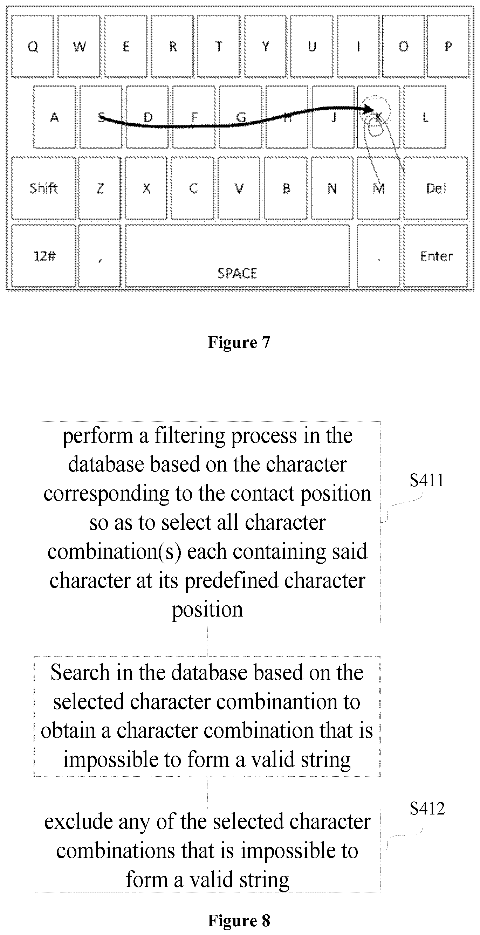

As shown in Fig. 7, a sliding path TK1 leads from the key "s", passes sequentially through the keys "d", "f", "g", "h" and "j" and ends at the key "k". In one embodiment of the present invention, referring Fig. 8, once a character corresponding to a contact position is obtained, a predefined filtering process is carried out in the database. This may include:
in step S411, performing a filtering process in the database based on the character corresponding to the contact position so as to select all character combination(s) each containing the character at its predefined character position. The character corresponding to the contact position may either be the first character of the character combination or not.

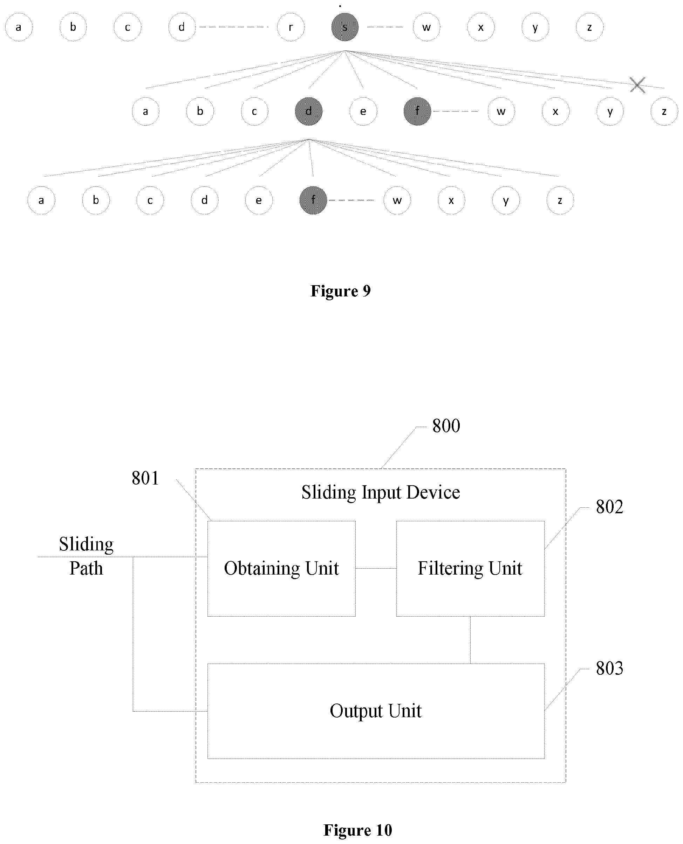

With the case shown in Fig. 7 as an example, when the starting location of the sliding path TK1, i.e., the location of the key "s", is touched, the character corresponding to this contact position, i.e., the first character "s" is obtained, followed by a search performed in the database based on the character "s". As a result, character combinations with "s" as the first character such as, for example, "s", "some", "she", "see", "since", etc. are obtained. In some embodiments, as shown in Fig. 9, step S411 may include, in particular, calibrating the node "s" at the first tier in the dictionary tree, i.e., selecting character combinations starting with the letter "s", for example, "sa", "sb", "sc", ..., and "sz". In some embodiments, for the first character, all its adjacent characters may also be taken into account. That is, when the location of the key "s" is touched, the characters including "s", "w", "e", "a", "f", "z" and "x" are all considered as corresponding to the contact position. Accordingly, step S411 may include calibrating each of the multiple node "s", "w", "e", "a", "f", "z" and "x" at the first tier in the dictionary tree (not shown in the figure).

For each non-first character, the filtering process is performed in the database based further on the previously selected character(s) in addition to the specific character itself such that in all the resulting character combinations, the specific character is at the predefined character position.

Specifically, for example, with reference to Fig. 7, with the sliding path proceeding from the key "s" to the key "d", a search is made in the database based not only on the character "d" but also on the previously selected character so that character combinations with the second character as "d" and the first character as "s", for example "sd", are obtained. Referring to Figure 9, the search made in the database based on the character "d" may include calibrating the second-tier node "d" that is linked to the first-tier node "s" in the dictionary tree as shown in the figure so as to select character combinations containing "s" and "d" as the first and second letters, respectively. After that, the sliding path further proceeds from the location of the key "d" to that of the key "f", and a search is made in the database based on the character "f" and one or more of the previously selected characters for character combinations with the character "f" at the predefined character position. At this point, with reference to Fig. 9, as the previous selected characters include the first-tier node "s" and the second-tier node "d", a filtering process is carried out based on the selected character "s" to obtain character combinations each containing the character "s" at the first position and the character "f" as the second position, for example, "sf", and another filtering process is conducted based on the selected character "d" to obtain character combination(s) each containing the character "s" at the first position, the character "d" as the second position and the character "f" as the third position, for example, "sdf".

It can be seen that, when the character corresponding to the currently contact position, for example, "f", is not the first selected character, a filtering process is performed based on combination(s) of one or more previous selected characters, for example, "s" and/or "d", and the character corresponding to the currently contact position, i.e., "f", to obtain character combination(s) each containing the character corresponding to the currently contact position, i.e., "f", at the predefined character position which is, for example, the second or third position. This can greatly reduce the required amount of calculation, improve the input efficiency, mitigate the need for caches and result in lower power consumption while ensuring that no valid strings are omitted.

Additionally, for example, with the sliding path further proceeding to the location of the key "g", filtering processes are respectively performed based on the character "f" as well as on the previous selected characters, i.e., the first-tier node "s" and the second-tier nodes "d" and "f" so as to obtain character combinations containing the character "g" respectively at the second, third and fourth positions, for example, {"sag"}, {"sag", "sfg"} and {"sdfg"}.

Furthermore, performing the filtering process in the database may further comprising step S412 for precluding any of the character combinations selected in step S411 that is impossible to form a valid string. Specifically, the character combinations selected in step S411 may be verified to identify any of them impossible to form a valid string.

For example, for the first character "s" in the sliding path TK1, each of the combinations of the character "s" with the characters "a", "b", ..., "z", i.e., "sa", "sb", ..., "sz", is successively searched to find whether there is/are valid string(s) beginning with it. For example, as there is no string beginning with the character combination "sz", this character combination, i.e., "sz", is excluded. Referring to Fig. 9, step S412 may include deleting the link connecting the first-tier node "s" and the second-tier node "z" during the calibration of the first-tier node "s".

As another example, for the first character "s" in the sliding path TK1, each of the combinations of the character "s" with the characters "a", "b", ..., "z" are successively searched in the database to find whether there is any path leading from the characters in the character combination ending with a word node, i.e., whether there is any valid string starting with the character combination. As there is no string beginning with the character combination "sz", the character combination "sz" is excluded.

The selection operation according to step S411 and the exclusion operation according to step S412 are not necessarily carried out in a particular order. For example, in other embodiments, the exclusion process may be performed first to verify all arbitrary combinations of all characters and exclude any character combination impossible to form a valid string. The selection process may be then performed based on the character corresponding to the currently contact position, to select, from the remaining character combinations in the exclusion process, all of those containing the character at their predefined character position, i.e., the character combinations containing valid characters.

In a further embodiment, candidate words may also be stored in the dictionary in a tree data structure so that each path of nodes is valid. Subsequently, a filtering process may be performed in the dictionary based on the character corresponding to the currently contact position to select all character combinations containing the character at the predefined character position.

It will be appreciated by those skilled in the art that the tree data storage structure shown in Figs. 6 or 9 is presented only as an example to explain the concept of the present invention. This storage method enables quickly ascertaining that whether a particular letter sequence is a candidate word in the tree-structured dictionary and which characters it contains at the respective nodes. It will be appreciated that, in embodiments of the present invention, the candidate words may also be stored in other data structures such as a heap, graph or a linked list.

Although sliding input methods according to embodiments of the present invention have been described in detail above in context of sliding input of English words. It will be appreciated by those skilled in the art that the sliding input methods may also support other languages without being limited to any particular keyboard layout.

In specific embodiments, the languages supported by the sliding input methods according to the present invention may include, but are not limited to, western languages such as English, French and German, Latin languages such as Spanish and Portuguese, and Asian languages such as Arabic, Hindi, Chinese, Japanese and Korean.

In specific embodiments, keyboard layouts supported by the sliding input methods according to the present invention may include, but are not limited to, the currently popular QWERTY layout, AZERTY layout and other keyboard layouts.

Fig. 10 is a structural schematic of a sliding input device according to embodiments of the present invention. As shown in Fig. 10, the sliding input device 800 may include an obtainment unit 801, a filtering unit 802 and an output unit 803.

The obtainment unit 801 is adapted to obtain a character corresponding to a contact position upon the detection of a sliding input motion.

The filtering unit 802 is adapted to perform a predefined filtering process on a database based on the character corresponding to the contact position so as to obtain valid character and obtain valid string(s) corresponding to a sliding path based on the valid character.

The output unit 803 is adapted to output the valid string(s) when the sliding path satisfies a predefined feedback condition.

In specific embodiments, the output unit 803 may further comprise a feedback determination unit adapted to determine whether the sliding path meets a predefined feedback condition, for example, whether the sliding path passes through a predetermined location of the keyboard, or whether a length of the sliding path reaches a preset length threshold, or whether a duration corresponding to the sliding path reaches a preset duration threshold. Once the feedback determination unit detects that the sliding path meets the predefined feedback condition, the output unit 803 outputs the valid string(s) corresponding to the sliding path.

In specific embodiments, the predetermined location of the keyboard may include gaps between adjacent keys in the keyboard. In this case, every time the sliding path passes through one of the gaps, the feedback determination unit will determines that the sliding path satisfies the predefined feedback condition, followed by outputting of the valid string(s) by the output unit 803. As such, candidate words selected based on characters corresponding to locations along the user's sliding path can be displayed in a real-time manner. In addition, the predetermined key location of the keyboard may also be, for example, the location of the space key, esc key, enter key or the like, or a location out of the key area, for example, the upper left corner of the screen.

In specific embodiments, the filtering unit 802 is adapted to, when the sliding path proceeds from a character key to another character key or from one stop to another stop, perform a selection process on the database based on the character corresponding to the currently contact position to select character combination(s) each containing the character corresponding to the currently contact position at its predefined character position, to perform a exclusion process on the character combination(s) containing the character corresponding to the currently contact position to exclude any of them impossible to form a valid string, and to obtain valid string(s) corresponding to the sliding path based on the character combination(s) containing the valid character.

In a specific embodiment, the filtering unit 802 may include: a selection unit adapted to select character combination(s) in the database, each containing the character corresponding to the contact position at its predefined character position; and a exclusion unit adapted to exclude any character combination impossible to form a valid string. The exclusion unit may perform the exclusion process on the character combination(s) each containing the character corresponding to the contact position resulting from the selection unit. Alternatively, the selection unit may select character combination(s) possible to form valid string(s) from those resulting from the exclusion unit.

In one embodiment, during the selection process performed by the filtering unit 802, when the character corresponding to the contact position is the first selected character, a search is performed in the database based on the character corresponding to the contact position for character combination(s) beginning with the character. When the character corresponding to the contact position is not the first selected character, the filtering process is performed based combination(s) of all subset(s) of previously selected character(s) with the character corresponding to the currently contact position.

It will be understood by those of ordinary skill in the art that all or part of the steps in the methods according to the foregoing embodiments can be implemented by hardware operating under the instructions of a program which can be stored in computer readable storage medium including ROMs, RAMs, floppy diskettes, CD-ROMs or the like

While the method and device of the present invention have been described in detail above with reference to specific embodiments, it is to be understood that the present invention is not limited to the disclosed embodiments. Any person of ordinary skill in the art can make various variations or modifications without departing from the spirit and scope of the invention. Accordingly, it is intended that the scope of the present invention be defined by the appended claims.

## Claims

1. A sliding input method, comprising:
upon detection of a sliding input motion, obtain a character corresponding to a contact position;
perform a filtering process in a database based on said character corresponding to the contact position to obtain valid character, and obtain valid string(s) corresponding to a sliding path based on the valid character,
wherein, further comprising: when the character corresponding to the contact position is not the first selected character, the filtering process performed in the database is based on a filter combination, so as to obtain a character combination each containing the character corresponding to said contact position at its predefined character position; wherein, said filter combination includes one or more previously selected characters before said contact position is reached, and the character corresponding to said contact position.

2. The sliding input method according to claim 1, wherein performing the filtering process in the database further comprises, excluding any character combination impossible to form a valid string from the character combination(s) containing the character corresponding to the contact position.

3. The sliding input method according to claim 1 or 2, wherein obtaining the valid string(s) corresponding to the sliding path based on the valid character comprises: obtaining the valid string(s) as a character combination containing one or more valid characters; or performing a prediction based on a character combination containing one or more valid characters to obtain a valid string(s) containing said character combination.

4. The sliding input method according to claim 1, further comprising, outputting the valid string(s) when the sliding path passes through a gap between two keys in the keyboard.

5. The sliding input method according to claim 1, further comprising, outputting the valid string(s) when a length of the sliding path reaches a preset length threshold or when a duration corresponding to the sliding path reaches a preset duration threshold.

6. The sliding input method according to claim 4 or 5, wherein outputting the valid string(s) comprises: displaying the one or more valid strings corresponding to said sliding path above, under or left or right to a key in the keyboard corresponding to the character corresponding to the current contact position or respective key(s) corresponding to character(s) next thereto or at other predetermined location(s).

7. The sliding input method according to claim 2, wherein outputting the valid string(s) comprises, providing a reminder about the output in a multimedia manner.

8. A sliding input device, comprising:
an obtainment unit, adapted to, upon detection a sliding input motion, obtain a character corresponding to a contact position; and
a filtering unit, adapted to perform a predefined filtering process on a database based on the character corresponding to the contact position to obtain valid character and, based on the valid character, obtain valid string(s) corresponding to a sliding path, wherein when the character corresponding to the contact position is not the first character, the filtering unit obtains character combination(s) each containing the character corresponding to said contact position at its predefined character position, on a basis of a filter combination of all subset(s) of previously selected character(s) before said contact position is reached and the character corresponding to said contact position.

9. The sliding input device according to claim 8, further comprising an input displaying unit, adapted to output the valid string(s), when a length of the sliding path reaches a preset length threshold or when a duration corresponding to the sliding path reaches a preset duration threshold.

10. The sliding input device according to claim 8, further comprising an input displaying unit adapted to output the valid string(s) when the sliding path passes through a gap between two keys in the keyboard.

11. The sliding input device according to claim 8, wherein when the filtering unit is further adapted to exclude any character combination impossible to form a valid string.

12. The sliding input device according to claim 11, wherein the filtering unit further comprises:
a selection unit, adapted to select character combination(s) in the database, each containing the character corresponding to the contact position at its predefined character position; and
an exclusion unit, adapted to exclude any character combination impossible to form a valid string.
